# EUROPEAN PATENT APPLICATION

(11) **EP 4 717 672 A1**
(43) Date of publication of application: **01.04.2026**
(21) Application number: 24203273.8
(22) Date of filing: 27.09.2024
(51) Int. Cl.: C01C 3/12, B01J 19/24

(54) **A METHOD FOR MANUFACTURING A PRUSSIAN WHITE COMPOUND**

(71) Applicant: Altris AB, 753 41 Uppsala (SE)
(72) Inventor: MOGENSEN, Ronnie, Uppsala (SE); NORDH, Tim, Uppsala (SE); SVENSSON, Mikael, Uppsala (SE)
(74) Representative: Kransell & Wennborg KB

(57) **Abstract**

The present disclosure generally relates to a method for manufacturing a Prussian White compound comprising:
a) reacting a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
b) reacting the second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed, wherein the Prussian White compound is defined by the formula AₐX¹[X²(CN)₆]_{1-y}, wherein 1.8 < a ≤ 2, and 0 ≤ y ≤ 0.2, wherein step a) is performed at a pH of from 9 to 14, preferably from 10 to 13.

The present disclosure also relates to a system for manufacturing a Prussian White compound.

## Description

### TECHNICAL FIELD

The present disclosure generally relates to a method for manufacturing a Prussian white compound and to a system for manufacturing the Prussian white compound.

### BACKGROUND

To date, lithium-ion based batteries (LIB) dominate the market for rechargeable batteries. However, the technology is associated with drawbacks, particularly since the availability of lithium resources is limited. Furthermore, the disposal of spent LIBs is challenging both from a recycling and waste management perspective. Specific precautions are typically required to handle spent LIBs in a safe manner, and improper disposal may have a negative environmental impact.

Sodium ion batteries (SIBs) have emerged as attractive alternatives to LIBs. SIBs offer environmental advantages due to the abundance of sodium resources and the reduced environmental impact associated with sodium extraction and processing.

The performance of a sodium ion battery is largely dependent on the properties of the cathode material.

Prussian White (PW) is an environmentally friendly cathode material, which has gained considerable attention due to its high theoretical capacity and rate performance. Prussian White has a crystal structure with an open three-dimensional framework and large interstitial voids, which makes it capable of storing sodium ions in an efficient manner.

Prussian White may be synthesized via co-precipitation, in which an aqueous solution of precursor salts, e.g. sodium ferrocyanide (Na₄Fe(CN)₆) and iron sulfate (FeSO₄) are mixed and reacted under conditions that lead to the formation of an insoluble product, Prussian White, to precipitate out of the solution.

Alternatively, Prussian White may be synthesized via acid decomposition, as described in e.g. WO2018/056890A1.

Acid decomposition involves treating a transition metal cyanide-containing precursor, e.g. sodium ferrocyanide (Na₄Fe(CN)₆) with an acid under conditions leading to decomposition of the precursor.

Common to the known methods of synthesizing Prussian White is the challenge of providing a high yield of the Prussian White material, and in particular a high yield of a high-quality Prussian White material.

The acid decomposition synthesis route is typically associated with the provision of Prussian White with a high sodium (or potassium) content (compared to co-precipitation). However, this synthesis route typically requires lengthy drying and recovering steps, separate sodium enrichment steps, and the use of complex mechanochemical post-synthetic modifications, all of which may be regarded as inconvenient for large scale production.

Furthermore, in the synthesis of Prussian White, large amounts of virgin starting materials are typically consumed, which is associated with high costs and high energy demands.

In view of this, there is a need to provide an improved and facilitated method to synthesize Prussian White via the acid decomposition route, which is cost-efficient, sustainable, and suitable for large scale production.

### SUMMARY

In view of the above-mentioned and other drawbacks of the prior art, it is an object of the present disclosure to provide improvements in relation to synthesizing a high yield of Prussian White material in a facilitated, sustainable and cost-efficient manner.

According to a first aspect of the present disclosure, there is provided method for manufacturing a Prussian White compound comprising:
a) reacting a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
b) reacting the second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed, wherein the Prussian White compound is defined by the formula AₐX¹[X²(CN)₆]_{1-y}, wherein 1.8 < a ≤ 2, and 0 ≤ y ≤ 0.2, wherein step a) is performed at a pH of from 9 to 14, preferably from 10 to 13.

The method of the present disclosure is associated with a significantly improved efficiency in synthesizing Prussian White via acid decomposition. Steps a) and b) of the method may be performed in a streamlined, uninterrupted manner, which allows for the continuous formation of high-quality Prussian White; i.e. Prussian White with a high sodium (or potassium) content. The method may be performed in-line. Hence, time-consuming and labor-intensive separation intermediate recrystallization and recovery steps of the second and third precursors can be avoided. Drying, separation, washing, and recovering steps of crystallized second and third precursors can thus be avoided. Accordingly, Prussian White may be manufactured in a significantly facilitated manner. Furthermore, the method of the present disclosure is associated with reduced energy demands as well as consumption of virgin material. The method of the present disclosure is suitable for large-scale production of Prussian White.

The inventors have further found that the reaction of step a) is exothermal. This advantageously allows for a more cost-effective and environmentally friendly method since less, or sometimes no additional heat needs to be supplied from an external heat source to obtain optimized reaction conditions in step b). An external heat source may for example be a hot plate, an oil bath, an oven, or an electrical heat tracing system.

The Prussian White material, obtainable by the method described hereinabove, is associated with a high sodium content, as evidenced by XRD characterization (see Example section).

Step a) is performed at a pH of from 9 to 14, preferably from 10 to 13.

This pH range is beneficial to improve the quality and yield of the second and third precursors, which is important for producing Prussian White with a high sodium (or potassium) content. At pH levels below 9, the second and third precursors can still form, however, undesirable co-precipitation of "poor-quality" Prussian White as well as the formation of unwanted iron solids (e.g. iron hydroxide and iron oxyhydroxide) may also occur, which may lead to reduced material performance and a decreased yield.

By performing step a) of the method at a pH level of from 9 to 14, preferably from 10 to 13, the potentially formed Prussian White is unstable, and the second and third precursors become the dominant species, ensuring a high yield and superior product quality.

The second precursor, defined by the formula A₄X¹(CN)₆ may be the same as the third precursor defined by the formula A₄X²(CN)₆. This will be the case if the cation of the salts used in step a) are the same, or if only one salt, such as FeSO₄ is used in step a). Accordingly, in the Prussian White compound formed in step b), defined by AₐX¹[X²(CN)₆]_{1-y}, X¹ and X² will be the same, e.g. Fe.

For example, step b) may comprise the reaction:

2 Na₄Fe(CN)₆ + 3 H₂SO₄ → Na₂Fe[Fe(CN)₆] + 6 HCN + 3 Na₂SO₄

Alternatively, the second precursor, defined by the formula A₄X¹(CN)₆ may be different from the third precursor defined by the formula A₄X²(CN)₆. This will be the case if the cations of the salts used in the reactions are different, e.g. if two different salts are utilized, such as FeSO₄ and CoSO₄ in step a). Accordingly, in the Prussian White compound formed in step b), defined by AₐX¹[X²(CN)₆]_{1-y}, X¹ and X² will be different, e.g. Fe, and Co, respectively.

For example, step b) may comprise the reaction:

Na₄Fe(CN)₆ + Na₄Mn(CN)₆ + 3 H₂SO₄ → Na₂Mn[Fe(CN)₆] + 6 HCN + 3 Na₂SO₄.

In exemplary embodiments, step a) may be performed in a first reactor vessel, and wherein step b) may be performed in a second reactor vessel arranged downstream of and in fluid communication with the first reactor vessel.

This is beneficial since the reaction conditions of step a) may differ from the reaction conditions of step b), particularly with respect to pH. Hence, the reaction conditions for steps a), and b), respectively may be optimized in the first, and second reactor vessel, respectively.

Furthermore, undesired co-precipitation of poor-quality Prussian White is avoided. This may occur if the pH level is shifted between an alkaline pH (in step a) and an acidic pH (in step b) in the same reactor vessel.

In exemplary embodiments, step b) is performed at a pH of from 1.8 to 4.5, preferably from 2 to 3.5.

The inventors have found that performing step b) in this pH range significantly improves the decomposition rate of the second and third precursors and also results in the formation of high-quality Prussian white with a high sodium content. The specific pH range further advantageously decreases the risk of unwanted side-reactions which may lead to a decreased yield of Prussian white compound.

In exemplary embodiments, step b) is performed at a temperature of from 65 to 95°C, preferably from 75 to 95°C.

A temperature in this range triggers acid decomposition of the second and third precursors. Accordingly, an improved yield of high-quality Prussian White may be obtained.

The salt in step a) may be defined by a first cation and a first anion; the acid in step b) being defined by a second cation and a second anion, wherein the second anion of the acid corresponds to the first anion of the salt.

Preferably, the anion of the salt ("first anion") matches the anion of the acid ("second anion"). A consistent chemical environment is thus provided, which secures that the decomposition reaction proceeds efficiently, and that unwanted by-products or side reactions (with e.g. foreign anions) are not formed.

In exemplary embodiments, the first precursor may be reacted with the salt in step a) in the presence of an alkaline additive, preferably wherein the alkaline additive is selected from the group consisting of NH₄OH, NaOH, Na₃PO₄, Na₂CO₃, KOH, and K₂CO₃, preferably from NaOH and KOH.

The inclusion of an alkaline additive serves to elevate and stabilize the pH during the reaction in step a). The alkaline additives mentioned hereinabove are substantially not consumed during the reaction, which ensures a relatively high pH throughout step a). As mentioned hereinbefore, maintaining an alkaline environment is important for preventing the formation of poor-quality Prussian White and achieving a high yield of the second and third precursors.

In exemplary embodiments, steps a) and b) are performed in an atmosphere comprising argon and/or nitrogen.

Accordingly, steps a) and b) are performed in an inert atmosphere. This is beneficial to prevent unwanted side reactions. An argon or nitrogen atmosphere prevents the Prussian White precursor from degrading or from reacting with oxygen in the air.

In exemplary embodiments, steps a) and step b) are conducted in the presence of water, preferably in an aqueous solution.

In other words, the second and third precursors can be formed in an aqueous solution during step a) and reacted in the aqueous solution during step b). Accordingly, steps of time-consuming purification and crystallization of the second and third precursors may be avoided. In addition, this advantageously allows for an environmentally friendly process as the use of costly and toxic organic solvents may be avoided. Furthermore, water has a relatively good heat/thermal storage capacity. Thus, the heat generated from the reaction in step a) heats the aqueous solution and may be substantially maintained and consequently benefit the reaction of step b).

During the acid decomposition step b), hydrogen cyanide (HCN) may be formed as a by-product. The acidic environment and the specific reaction conditions cause the cyanide groups of the transition metal cyanide-containing precursor, e.g. sodium ferrocyanide (Na₄Fe(CN)₆, to dissociate from the ferrocyanide precursor and combine with hydrogen ions (H⁺) to form HCN gas. The remaining free metal ions then react with residual transition metal cyanide-containing precursor to form Prussian white.

The production of HCN gas during synthesis is associated with several challenges. HCN is toxic and requires stringent safety measures for handling and disposal. Furthermore, improper management of HCN can lead to severe environmental risks.

Hence, in step b) HCN may be formed as a by-product, and wherein the method may further comprise:
c) recycling the HCN by reacting NaOH or KOH with the HCN to form the first precursor, and
d) introducing the first precursor into step a).

Accordingly, HCN formed during the acid decomposition of the second and third precursors may be reacted with NaOH or KOH to form the first precursor. The formed first precursor may then be re-introduced into step a) for subsequent manufacturing of additional second and third precursors, and eventually additional Prussian white. In this regard, the efficiency is increased and less virgin first precursor is consumed.

The HCN is recycled in the method and utilized for continuous Prussian White synthesis. Accordingly, the manufacturing method is environmentally friendly, and cost-effective. Furthermore, time-consuming and labor-intensive recovery, destructions steps, and/or waste packaging and transporting steps of the formed HCN may be avoided.

The HCN produced during acid decomposition is scrubbed using NaOH (or KOH) to form NaCN (or KCN); i.e. first precursor. In this regard, the method of the present disclosure may decrease strenuous handling and disposal of toxic HCN. Accordingly, a safer, less hazardous, and more sustainable method to synthesize Prussian White is provided.

In exemplary embodiments, step c) may be performed in a scrubbing device arranged in fluid communication with the first and/or the second reactor vessel.

This allows for an efficient transport of fluids to and from the first reactor vessel, and the second reactor vessel (if present), and the scrubbing device. The arrangement increases the safety as it allows for avoiding steps of extracting fluids to separate transport vessels and, e.g. manually moving such transport vessels within a factory or to an external facility.

Step d) of introducing the first precursor into step a) may comprise:
i) collecting the first precursor in an aqueous solution in the scrubbing device; and
ii) introducing the aqueous solution comprising the first precursor into the first reaction vessel.

This advantageously allows for avoiding separate steps of time-consuming and cost-intensive steps of crystallizing the first precursor prior to introducing the first precursor into the first reaction vessel. Furthermore, by conducting step i) and ii) it is relatively easy to maintain a closed system, thereby avoiding unwanted reactions with ambient air.

According to another aspect, there is provided a system for manufacturing a Prussian White compound comprising a reactor unit configured to:
- conduct a first reaction of a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆, and a third precursor defined by the formula A₄X²(CN)₆, wherein A is Na or K, and wherein X¹ and X² are individually selected from Co, Cr, Fe, and Mn; and
- conduct a second reaction of the second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed, wherein the Prussian White compound is defined by the formula AₐX¹[X²(CN)₆]_{1-y}, wherein 1.8 < a ≤ 2, and 0 ≤ y ≤ 0.2, wherein the first reaction is performed at a pH of from 9 to 14, preferably from 10 to 13.

In exemplary embodiments, step a) is performed in a first reactor vessel of the reactor unit, and wherein step b) is performed in a second reactor vessel of the reactor unit arranged downstream of and in fluid communication with the first reactor vessel.

Accordingly, the reaction conditions of the respective steps a), and b) may be optimized.

In exemplary embodiments, the system may further comprise a scrubbing device arranged in fluid communication with the reactor unit, wherein the scrubbing device is configured to conduct a third reaction of NaOH or KOH with HCN formed as a by-product in the second reaction to form the first precursor, and wherein the scrubbing device is configured to feed the first precursor into the reactor unit.

As mentioned hereinbefore, HCN may be formed as a by-product in the second reaction.

Hence, the system may further comprise a scrubbing device arranged in fluid communication with the reactor unit; the scrubbing device being configured to conduct a third reaction of NaOH or KOH with HCN to form the first precursor, and wherein the scrubbing device is further configured to feed the first precursor into the reactor unit.

The effects and features of the second aspect are analogous to those described above in connection with the first aspect. Embodiments mentioned in relation to the first aspect are compatible with the second aspect. It is further noted that the inventive concept relate to all possible combinations of features unless explicitly stated otherwise.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF THE DRAWINGS

The various aspects of the present disclosure, including its particular features and advantages, will be readily understood from the following detailed description and the accompanying drawings, in which:
Figure 1 shows a flowchart explaining the steps of a method in accordance with exemplary embodiments of the present disclosure;
Figure 2 schematically illustrates a system in accordance with exemplary embodiments of the present disclosure;
Figures 3a-e illustrate the XRD patterns obtained for the Prussian white particles produced in Example 1;
Figure 4 illustrates the XRD pattern obtained for the Prussian white particles produced in Example 2.

The figures are not necessarily to scale, and generally only show parts that are necessary in order to elucidate the inventive concept, wherein other parts may be omitted or merely suggested.

### DETAILED DESCRIPTION

The present disclosure will now be described more fully hereinafter with reference to the accompanying drawings. The present disclosure may, however, be embodied in many different forms and should not be construed as limited to the embodiments set forth herein; rather, these embodiments are provided for thoroughness and completeness, and fully convey the scope of the present disclosure to the skilled person.

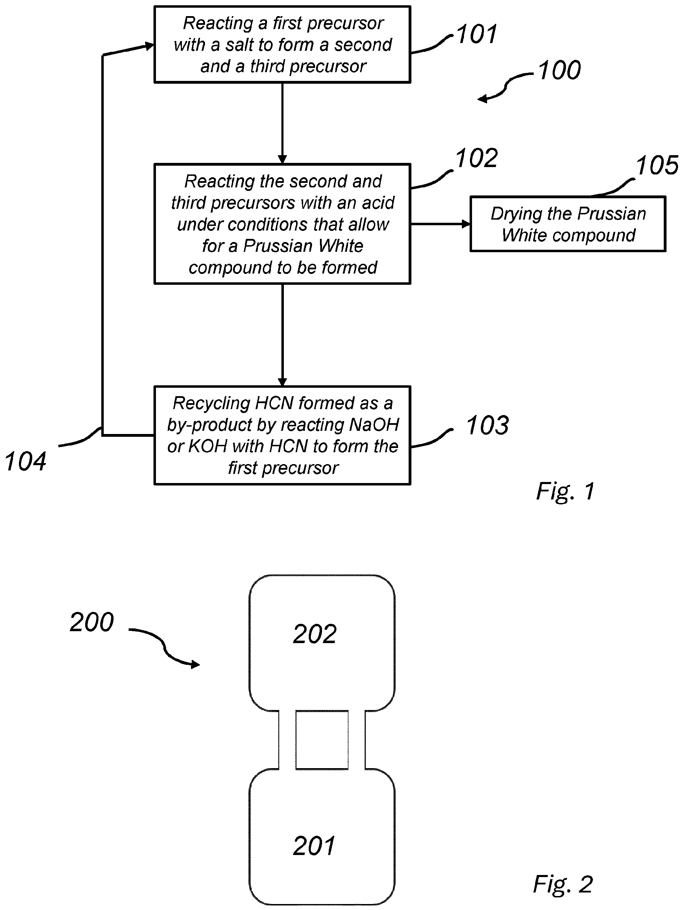

Figure 1 is a flow-chart schematically illustrating the various steps of the method of the present disclosure. The method for manufacturing a Prussian White compound comprises:
a) reacting a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn (denoted 101 in figure 1);
b) reacting the second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed, wherein the Prussian White compound is defined by the formula AₐX¹[X²(CN)₆]_{1-y}, wherein 1.8 < a ≤ 2, and 0 ≤ y ≤ 0.2, wherein step a) is performed at a pH of from 9 to 14, preferably from 10 to 13. (denoted 102 in figure 1).

As used herein, the term "precursor" refers to a compound or substance that precedes and partakes in the formation of another compound during a chemical reaction.

The salt in step a) is preferably FeSO₄, FeCl₂, MnSO₄, or MnCl₂, more preferably FeSO₄.

As used herein, the term "salt" refers to a compound comprising positively charged ions (cations) and negatively charged ions (anions) that are ionically bonded. In a dissolved state the cation(s) and the anion(s) of the salt are dissociated into individual ions. Salt and dissolved salt are known to the person skilled in the art.

As used herein, the term "reactor vessel" means a container or chamber in which chemical reactions are conducted. The reactor vessel is configured to contain and control chemical reactions under specific conditions of pressure, temperature, and chemical environment. The reactor vessel(s) is/are typically constructed from materials resistant to the chemicals involved and capable of withstanding the operational conditions, including, e.g. pressures and temperatures. Suitable materials for withstanding at least two cycles are known to the person skilled in the art.

The reactions of step a) and step b) may be performed in the same first reactor vessel. Preferably, the reaction of step a) is performed in a first reactor vessel, and wherein the reaction of step b) is performed in a second reactor vessel arranged downstream of and in fluid communication with the first reactor vessel.

Accordingly, the method of the present disclosure may be conducted batch-wise or semi-continuous/continuous. Furthermore, the reaction conditions of the respective steps a) and b) may be optimized. This is beneficial to prevent undesired co-precipitation of poor-quality Prussian White.

As used herein, the term "fluid" includes liquid and gas.

That the second reactor vessel is arranged in "fluid communication" with the first reactor vessel means that the connection between the reactor vessels allow for the flow or transfer of fluid (liquids or gases) between them. The connection may be direct or through conduits, pipes, channels, or passages. The fluid communication may be facilitated using valves, pumps, seals, and other mechanisms to regulate flow rates, pressure, and direction.

CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, and MnCl₂ are also known as cobolt(II) sulfate, cobolt(II) phosphate, cobolt(II) acetate, cobolt(II) oxalate, cobolt(II) formate, cobolt chloride, chromium(II) sulfate, chromium(II) phosphate, chromium(II) acetate, chromium(II) oxalate, chromium(II) formate, chromium chloride, ferrous sulfate, ferrous phosphate, ferrous acetate, ferrous formate, ferrous oxalate, ferrous chloride, manganese(II) sulfate, manganese(II) phosphate, manganese(II) acetate, manganese(II) oxalate, manganese(II) formate, and manganese chloride, respectively.

H₂SO₄, H₄C₂O₂, H₂C₂O₄, H₂CO₂, H₃PO₄, H₃PO₃, HCl, and HClO₂ are also known as sulfuric acid, acetic acid, oxalic acid, formic acid, phosphoric acid, phosphorous acid, hydrochloric acid, and chlorous acid respectively.

NaCN and KCN are also known as sodium cyanide and potassium cyanide, respectively.

Reacting the second and third precursors with an acid "under conditions that allow for a Prussian White compound to be formed" means performing step b) at a temperature of from 75 to 98°C, preferably from 80 to 95°C, preferably from 85 to 95°C and at a pH of from 1.8 to 4.5, preferably from 2 to 3.5. Step b) may be performed during 1 to 24 hours, such as 2 to 20 hours, preferably 3 to 12 hours, more preferably 4 to 8 hours. It is contemplated that such conditions trigger acid decomposition of the second and third precursors, whereby the Prussian White compound is formed. Reacting the second and third precursors with an acid may thus be an acid decomposition reaction. Expressed differently, the conditions of step b) allow for acid decomposition of the second and third precursors.

The method of the present disclosure is an in-line method. This is beneficial since it allows for the entire process to be performed continuously without interruption. This eliminates the need for intermediate recovery, drying, or sodium enrichment steps, which significantly reduces processing time and energy consumption. Additionally, the in-line configuration minimizes handling and contamination risks, enhancing both efficiency and product quality, making it highly suitable for large-scale production. Furthermore, the use of toxic and costly organic solvents can be avoided. The obtained Prussian White compound has a high sodium content, and is suitable for use as the active material of a cathode in a sodium or potassium ion battery cell.

The Prussian White compound when used as a cathode active material facilitates the intercalation and deintercalation of sodium (or potassium) ions during the charging and discharging cycles. This process is crucial for the movement of ions that generates electrical current in a battery. The open Prussian White framework allows for easy movement of ions, thereby contributing to an improved cycling stability and capacity of the battery cell. In particular, the Prussian White obtained by the method of the present disclosure has a very high sodium (or potassium) content which advantageously allows for improved specific capacity.

Furthermore, the Prussian White obtained is associated with a low vacancy content. A high vacancy content may compromise the structural integrity of the material making it more prone to structural degradation and/or collapsing during cycling in battery applications. Furthermore, with increasing vacancy content the material's capacity for storing sodium (or potassium) is reduced as the charge balance must be maintained in the material.

As illustrated in figure 1, the method may comprise a step of drying the Prussian White compound obtained in step b) (denoted 105 in figure 1).

The method may comprise the steps of:
- separating the Prussian White compound obtained in step b);
- drying the Prussian White compound.

The separation step may for example be performed using a filter press or a centrifuge.

The step of drying may be performed by means known to the skilled person. The step of drying may for example be performed using a rotary dryer, a fluidized bed dryer, a spray dryer, a vacuum dryer, or a conveyor dryer.

The term "Prussian White compound" means a compound defined by the formula AₐX¹[X²(CN)₆]_{1-y}, wherein A is Na or K, 1.8 < a ≤ 2, 0 ≤ y ≤ 0.2, X¹ and X² are individually selected from Co, Cr, Fe, and Mn. Preferably, X¹ and X² are selected from Fe and Mn. The Prussian White compound comprises iron (Fe), manganese (Mn), cobolt (Co), or chromium (Cr) ions which are linked through cyanide (CN) bridges, forming a three-dimensional framework. The framework forms a cubic-like arrangement, in which each iron, manganese, cobolt or chromium ion is surrounded by six cyanide groups. Sodium or potassium ions reside within the cavities or interstitial sites of the cubic arrangement formed by e.g. Fe[Fe(CN)₆] or Mn[Mn(CN)₆] units. Herein, Prussian white compound encompasses both hydrated and dehydrated Prussian white compounds.

Hydrated Prussian white compounds may be understood as Prussian white compounds having water molecules arranged in voids and/or interstitial spaces of the crystal structure. The water molecules may be bonded through a hydrogen bond with the nitrogen of the (CN)₆, a metal-ligand bond with one of the transition metal cations, or an ion-dipole bond with sodium.

Dehydrated Prussian white compounds may be understood as Prussian white compounds substantially free of water molecules arranged in voids and/or interstitial spaces of the crystal structure. The amount of water molecules arranged in voids and/or interstitial spaces of the crystal structure may be determined using Thermogravimetric Analysis (TGA).

In some embodiments, X¹ and X² are Fe. Preferably, X¹ and X² are Fe, and A is Na. The method of the present disclosure may yield Prussian white compounds defined by the formula AₐX¹[X²(CN)₆]_{1-y}, wherein A is Na, 1.8 < a ≤ 2, 0 ≤ y ≤ 0.2, X¹ and X² are Fe. In particular, such a Prussian White compound obtained from the method of the present disclosure is associated with a high-quality, and has a high degree of crystallinity.

The chemical composition of the Prussian white compound may be measured by methods known in the art. For example, an inductively coupled plasma (ICP) spectrometer (e.g. PerkinElmer Avio 200), CHNOS elemental analysis and/or Mössbauer spectrometry (e.g. an MS 96 spectrometer) may be used to measure a content of element(s) in a sample of the Prussian white compound. The Prussian white compound is a solid and may be in the form of particles, i.e., discrete portions of solid matter.

Typically, the particles have a Dv50 value of from 1 to 50µm, preferably from 10 to 45µm, more preferably in the range of from 12 to 30µm, as determined according to ISO 13320:2009.

Herein, the term "Dv50 value" refers to a particle diameter below which 50% of the sample volume exists. The Dv50 value may also be understood as the median particle size by volume or the volumetric particle size distribution. Dv50 as such is known to the person skilled in the art. A Dv50 value of a sample volume (a plurality of particles) may be measured using, e.g. a PSA 1090 LID (Anton Paar) instrument. The Dv50 may be determined according to ISO 13320:2009 and/or ASTM B822-20.

Typically, steps a) and step b) of the method are conducted in the presence of water, e.g. in an aqueous solution.

Step a) of the method is performed at a pH of from 9 to 14, preferably from 10 to 13.

The alkaline pH may be controlled by performing step a) in the presence of an alkaline additive. Hence, in step a), the first precursor may be reacted with the salt in the presence of an alkaline additive, preferably wherein the alkaline additive is selected from the group consisting of NH₄OH, NaOH, Na₃PO₄, Na₂CO₃, KOH, and K₂CO₃.

Controlling the pH within this range is advantageous for obtaining a high yield of high-quality Prussian White without the interference of lower quality co-precipitates.

NH₄OH, NaOH, Na₃PO₄, Na₂CO₃, KOH, and K₂CO₃ are also known as ammonium hydroxide, sodium hydroxide, trisodium phosphate, sodium carbonate, potassium hydroxide, and potassium carbonate, respectively.

Step b) of the method is preferably performed at a pH of from 1.8 to 4.5, preferably from 2 to 3.5.

Preferably, step b) of the method is performed at a temperature of from 65 to 95°C, preferably from 75 to 95°C.

The inventors have found that a pH and/or temperature in these ranges significantly improves the decomposition of the second and third precursors (in step b) and results in the formation of Prussian white having a high sodium (and potassium) content.

The salt in step a) may be defined by a first cation and a first anion; the acid in step b) being defined by a second cation and a second anion, wherein the second anion of the acid corresponds to the first anion of the salt.

This advantageously allows for a cost-effective process since only one type of anion (and any accompanying by-products thereof) stemming from the first and second anion must be handled during down-stream processing steps such as effluent treatment. Having different anions of the acid and the salt may lead to two types of residual anions and/or the formation of (at least) one more by-product which may need to be separated and/or processed using different and more complex methods.

In other words, a consistent chemical environment is provided, which secures that the formation of Prussian White compound proceeds efficiently, and that unwanted by-products or side reactions (with e.g. foreign anions) are not formed.

In other words, if the salt in step a) is FeSO₄ or MnSO₄, the acid in step b) is preferably H₂SO₄. If the salt in step a) is FePO₄ or Mn₃(PO₄)₂, the acid in step b) is preferably H₃PO₄.

Steps a) and b) are preferably performed in an atmosphere comprising argon or nitrogen.

Accordingly, the precursor reacts with the acid and/or salt in an inert atmosphere, which prevents undesired exposure to ambient air (which could yield undesired side-reactions).

As illustrated in figure 1, the method may further comprise additional step(s).

As mentioned hereinbefore, the reaction of step b) typically involves the formation of HCN as a by-product.

Accordingly, when HCN is formed as a by-product in step b), the method may further comprise:
c) recycling the HCN by reacting NaOH or KOH with the HCN to form the first precursor (denoted 103 in figure 1), and
d) introducing the first precursor into step a) (denoted 104 in figure 1).

This is advantageous since it enhances the efficiency of the method. Less virgin first precursor is required as the recycling of HCN secures that additional first precursor material can be continuously re-introduced into the process. Furthermore, the problems associated with toxic HCN are overcome and various hazardous waste management or destruction steps can be avoided.

The term "virgin first precursor material" refers a first precursor material which has not been recycled through the process of the present disclosure. Virgin NaCN (or KCN) may for example be produced by reacting HCN with NaOH (or KOH).

The term "recycling" refers to the process of recovering and treating by-products to produce compounds which may be entered into a production cycle.

The term "by-product" refers to a secondary product or substance that is produced during a chemical reaction or manufacturing process but is not the primary intended product. In other words, by-products are generated alongside the primary intended product.

Step c) (denoted 103 in figure 1) may be performed in a scrubbing device arranged in fluid communication with the first and/or the second reactor vessel.

Herein, the term "scrubbing device" refers to an apparatus adapted to remove, contaminants or specific compounds in a gas or liquid stream. In particular, a scrubbing device refers to a device configured to house/facilitate a reaction between HCN and NaOH/KOH to form NaCN/KCN. The scrubbing device may be a venturi scrubber, a packed-bed scrubber, or a spray tower scrubber. These scrubbing devices are known to the skilled person.

The scrubbing device may comprise two or more scrubber units independently selected from a venturi scrubber, a packed bed scrubber, or a spray tower. This advantageously allows for combining characteristic features of different types of scrubber units. In the example of the two or more scrubber units, the scrubber units may be arranged in series and/or in parallel. Preferably, at least two scrubber units are arranged in series and at least one of the scrubber units is a venturi scrubber configured to receive HCN from the first and/or second reactor vessel.

HCN formed in step b) may be directed to the scrubbing device by a carrier agent or by providing a pressure differential between the scrubbing device and the first and/or second reactor vessel.

Directing the HCN formed in step b) to the scrubbing device by a carrier agent or by providing a pressure differential between the scrubbing device and the first and/or second reactor vessel advantageously allows for relatively rapidly moving the HCN from the first and/or second reactor vessel to the scrubbing device. Thereby the risk of unwanted HCN polymerization, on e.g., reactor vessel walls or pipes, is reduced. Additionally, this decreases the amount of HCN (in gas phase) in a headspace in the first and/or second reactor vessel. In other words, the partial pressure of the HCN in the headspace is decreased allowing for more HCN to be released from, e.g., a reactor liquid and be transported to the scrubbing device.

The carrier agent may be an inert gas, such as nitrogen gas or argon gas, preferably nitrogen gas. Utilizing an inert gas is advantageous since substantially no unwanted side reactions between the HCN and the carrier agent molecules occur, and oxidation of the Prussian white compound is prevented.

Alternatively or in addition, a pressure differential may be provided by applying a vacuum or by providing a lower pressure in the scrubbing device relative to the first and/or second reactor vessel.

Step d) of introducing the first precursor into step a) may comprise:
i) collecting the first precursor in an aqueous solution in the scrubbing device; and
ii) introducing the aqueous solution comprising the first precursor into the first reaction vessel.

In embodiments wherein the salt in step a) is FeSO₄, step a) comprises reacting:

NaCN with FeSO₄ to form Na₄Fe(CN)₆,

or

KCN with FeSO₄ to form K₄Fe(CN)₆.

Step a) may comprise the reaction:

6 NaCN + FeSO₄ → Na₄Fe(CN)₆ + Na₂SO₄,

or

6 KCN + FeSO₄ → K₄Fe(CN)₆ + K₂SO₄.

In embodiments wherein the salt in step a) is Fe₃(PO₄)₂, step a) comprises reacting:

NaCN with Fe₃(PO₄)₂ to form Na₄Fe(CN)₆,

or

KCN with Fe₃(PO₄)₂ to form K₄Fe(CN)₆.

Step a) may comprise the reaction:

18 NaCN + Fe₃(PO₄)₂ → 3 Na₄Fe(CN)₆ + 2 Na₃PO₄,

or

18 KCN + Fe₃(PO₄)₂ → 3 K₄Fe(CN)₆ + 2 K₃PO₄.

In embodiments wherein the salt in step a) is Fe(CH₃CO₂)₂, step a) comprises reacting:

NaCN with Fe(CH₃CO₂)₂ to form Na₄Fe(CN)₆,

or

KCN with Fe(CH₃CO₂)₂ to form K₄Fe(CN)₆.

Step a) may comprise the reaction:

6 NaCN + Fe(CH₃CO₂)₂ → Na₄Fe(CN)₆ + 2 NaH₃C₂O₂,

or

6 KCN + Fe(CH₃CO₂)₂ → K₄Fe(CN)₆ + 2 KH₃C₂O₂.

In embodiments wherein the salt in step a) is Fe(HCO₂)₂, step a) comprises reacting:

NaCN with Fe(HCO₂)₂ to form Na₄Fe(CN)₆,

or

KCN with Fe(HCO₂)₂ to form K₄Fe(CN)₆.

Step a) may comprise the reaction:

6 NaCN + Fe(HCO₂)₂ → Na₄Fe(CN)₆ + 2 NaHCO₂,

or

6 KCN + Fe(HCO₂)₂ → K₄Fe(CN)₆ + 2 KHCO₂.

In embodiments wherein the salt in step a) is FeC₂O₂, step a) comprises reacting:

NaCN with FeC₂O₂ to form Na₄Fe(CN)₆,

or

KCN with FeC₂O₂ to form K₄Fe(CN)₆.

Step a) may comprise the reaction:

6 NaCN + FeC₂O₂ → Na₄Fe(CN)₆ + Na₂C₂O₂,

or

6 KCN + FeC₂O₂ → K₄Fe(CN)₆ + K₂C₂O₂.

In embodiments wherein the salt in step a) is FeCl₂, step a) comprises reacting:

NaCN with FeCl₂ to form Na₄Fe(CN)₆,

or

KCN with FeCl₂ to form K₄Fe(CN)₆.

Step a) may comprise the reaction:

6 NaCN + FeCl₂ → Na₄Fe(CN)₆ + 2 NaCl,

or

6 KCN + FeCl₂ → K₄Fe(CN)₆ + 2 KCl.

In embodiments wherein the salt in step a) is MnSO₄, step a) comprises reacting:

NaCN with MnSO₄ to form Na₄Mn(CN)₆,

or

KCN with MnSO₄ to form K₄Mn(CN)₆.

Step a) may comprise the reaction:

6 NaCN + MnSO₄ → Na₄Mn(CN)₆ + Na₂SO₄,

or

6 KCN + MnSO₄ → K₄Mn(CN)₆ + K₂SO₄.

In embodiments wherein the salt in step a) is Mn₃(PO₄)₂, step a) comprises reacting:

NaCN with Mn₃(PO₄)₂ to form Na₄Mn(CN)₆,

or

KCN with Mn₃(PO₄)₂ to form K₄Mn(CN)₆.

Step a) may comprise the reaction:

18 NaCN + Mn₃(PO₄)₂ → Na₄Mn(CN)₆ + 2 Na₃PO₄,

or

18 KCN + Mn₃(PO₄)₂ → 3 K₄Mn(CN)₆ + 2 K₃PO₄.

In embodiments wherein the salt in step a) is Mn(CH₃CO₂)₂, step a) comprises reacting:

NaCN with Mn(CH₃CO₂)₂ to form Na₄Mn(CN)₆,

or

KCN with Mn(CH₃CO₂)₂ to form K₄Mn(CN)₆.

Step a) may comprise the reaction:

6 NaCN + Mn(CH₃CO₂)₂ → Na₄Mn(CN)₆ + 2 NaH₃C₂O₂,

or

6 KCN + Mn(CH₃CO₂)₂ → K₄Mn(CN)₆ + 2 KH₃C₂O₂.

In embodiments wherein the salt in step a) is Mn(HCO₂)₂, step a) comprises reacting:

NaCN with Mn(HCO₂)₂ to form Na₄Mn(CN)₆,

or

KCN with Mn(HCO₂)₂ to form K₄Mn(CN)₆.

Step a) may comprise the reaction:

6 NaCN + Mn(HCO₂)₂ → Na₄Mn(CN)₆ + 2 NaHCO₂,

or

6 KCN + Mn(HCO₂)₂ → K₄Mn(CN)₆ + 2 KHCO₂.

In embodiments wherein the salt in step a) is MnC₂O₂, step a) comprises reacting:

NaCN with MnC₂O₂ to form Na₄Mn(CN)₆,

or

KCN with MnC₂O₂ to form K₄Mn(CN)₆.

Step a) may comprise the reaction:

6 NaCN + MnC₂O₂ → Na₄Mn(CN)₆ + Na₂C₂O₂,

or

6 KCN + MnC₂O₂ → K₄Mn(CN)₆ + K₂C₂O₂.

In embodiments wherein the salt in step a) is MnCl₂, step a) comprises reacting:

NaCN with MnCl₂ to form Na₄Mn(CN)₆,

or

KCN with MnCl₂ to form K₄Mn(CN)₆.

Step a) may comprise the reaction:

6 NaCN + MnCl₂ → Na₄Mn(CN)₆ + 2 NaCl,

or

6 KCN + MnCl₂ → K₄Mn(CN)₆ + 2 KCl.

Both the second and third precursors may be Na₄Fe(CN)₆, or K₄Fe(CN)₆, and wherein step b) may comprise reacting:

Na₄Fe(CN)₆ with H₂SO₄ to form NaₐFe[Fe(CN)₆] and HCN,

or K₄Fe(CN)₆ with H₂SO₄ to form KₐFe[Fe(CN)₆] and HCN, wherein 1.8 < a ≤ 2.

Step b) may comprise the reaction:

2 Na₄Fe(CN)₆ + 3 H₂SO₄ → Na₂Fe[Fe(CN)₆] + 6 HCN + 3 Na₂SO₄,

or

2 K₄Fe(CN)₆ + 3 H₂SO₄ → K₂Fe[Fe(CN)₆] + 6 HCN + 3 K₂SO₄.

Both the second and third precursors may be Na₄Fe(CN)₆, or K₄Fe(CN)₆, and step b) may comprise reacting:

Na₄Fe(CN)₆ with H₄C₂O₂ to form NaₐFe[Fe(CN)₆] and HCN, or

K₄Fe(CN)₆ with H₄C₂O₂ to form KₐFe[Fe(CN)₆] and HCN,

wherein 1.8 < a ≤ 2.

Step b) may comprise the reaction:

2 Na₄Fe(CN)₆ + 3 H₄C₂O₂ → Na₂Fe[Fe(CN)₆] + 6 HCN + 3 Na₂C₂O₄,

or

2 K₄Fe(CN)₆ + 3 H₄C₂O₂ → K₂Fe[Fe(CN)₆] + 6 HCN + 3 K₂C₂O₄.

Both the second and third precursors may be Na₄Fe(CN)₆, or K₄Fe(CN)₆, and step b) may comprise reacting:

Na₄Fe(CN)₆ with H₂C₂O₄ to form NaₐFe[Fe(CN)₆] and HCN, or

K₄Fe(CN)₆ with H₂C₂O₄ to form KₐFe[Fe(CN)₆] and HCN,

wherein 1.8 < a ≤ 2.

Step b) may comprise the reaction:

2 Na₄Fe(CN)₆ + 3 H₂C₂O₄ → Na₂Fe[Fe(CN)₆] + 6 HCN + 3 Na₂C₂O₄,

or

2 K₄Fe(CN)₆ + 3 H₂C₂O₄ → K₂Fe[Fe(CN)₆] + 6 HCN + 3 K₂C₂O₄.

Both the second and third precursors may be Na₄Fe(CN)₆, or K₄Fe(CN)₆, and step b) may comprise reacting:

Na₄Fe(CN)₆ with H₂CO₂ to form NaₐFe[Fe(CN)₆] and HCN,

or

K₄Fe(CN)₆ with H₂CO₂ to form KₐFe[Fe(CN)₆] and HCN,

wherein 1.8 < a ≤ 2.

Step b) may comprise the reaction:

2 Na₄Fe(CN)₆ + 6 H₂CO₂ → Na₂Fe[Fe(CN)₆] + 6 HCN + 6 NaHCO₂,

or

2 K₄Fe(CN)₆ + 6 H₂CO₂ → K₂Fe[Fe(CN)₆] + 6 HCN + 6 KHCO₂.

Both the second and third precursors may be Na₄Fe(CN)₆, or K₄Fe(CN)₆, and step b) may comprise reacting:

Na₄Fe(CN)₆ with H₃PO₄ to form NaₐFe[Fe(CN)₆] and HCN,

or

K₄Fe(CN)₆ with H₃PO₄ to form KₐFe[Fe(CN)₆] and HCN,

wherein 1.8 < a ≤ 2.

Step b) may comprise the reaction:

2 Na₄Fe(CN)₆ + 6 H₃PO₄ → Na₂Fe[Fe(CN)₆] + 6 HCN + 6 NaH₂PO₄,

or

2 K₄Fe(CN)₆ + 6 H₃PO₄ → K₂Fe[Fe(CN)₆] + 6 HCN + 6 KH₂PO₄.

Both the second and third precursors may be Na₄Fe(CN)₆, or K₄Fe(CN)₆, and step b) may comprise reacting:

Na₄Fe(CN)₆ with H₃PO₃ to form NaₐFe[Fe(CN)₆] and HCN,

or

K₄Fe(CN)₆ with H₃PO₃ to form KₐFe[Fe(CN)₆] and HCN,

wherein 1.8 < a ≤ 2.

Step b) may comprise the reaction:

2 Na₄Fe(CN)₆ + 6 H₃PO₃ → Na₂Fe[Fe(CN)₆] + 6 HCN + 6 NaH₂PO₃,

or

2 K₄Fe(CN)₆ + 6 H₃PO₃ → K₂Fe[Fe(CN)₆] + 6 HCN + 6 KH₂PO₃.

Both the second and third precursors may be Na₄Fe(CN)₆, or K₄Fe(CN)₆, and step b) may comprise reacting:

Na₄Fe(CN)₆ with HCl to form NaₐFe[Fe(CN)₆] and HCN,

or

K₄Fe(CN)₆ with HCl to form KₐFe[Fe(CN)₆] and HCN,

wherein 1.8 < a ≤ 2.

Step b) may comprise the reaction:

2 Na₄Fe(CN)₆ + 6 HCl → Na₂Fe[Fe(CN)₆] + 6 HCN + 6 NaCl,

or

2 K₄Fe(CN)₆ + 6 HCl → K₂Fe[Fe(CN)₆] + 6 HCN + 6 KCl.

Step c) (denoted 103 in figure 1) comprises the reaction:

HCN + NaOH → NaCN + H₂O,

or

HCN + KOH → KCN + H₂O.

The products NaCN or KCN obtained in step c) are introducible into step a) of the method according to the present disclosure. This step is illustrated by the arrow 104 in figure 1. The formed product water (H₂O) is environmentally friendly and may, in some embodiments, be introduced in the method of the present disclosure.

Figure 2 schematically illustrates a system according to a second aspect of the present disclosure. According to the second aspect, there is provided a system 200 for manufacturing a Prussian White compound comprising a reactor unit 201 configured to:
- conduct a first reaction of a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn; and
- conduct a second reaction of the second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed, wherein the Prussian White compound is defined by the formula AₐX¹[X²(CN)₆]_{1-y}, wherein 1.8 < a ≤ 2, and 0 ≤ y ≤ 0.2, wherein the first reaction is performed at a pH of from 9 to 14, preferably from 10 to 13.

The first reaction may be performed in a first reactor vessel of the reactor unit 201, and wherein step b) may be performed in a second reactor vessel of the reactor unit 201 arranged downstream of and in fluid communication with the first reactor vessel.

Herein, a device, such as a reactor unit, configured to conduct a reaction, refers to a device able to facilitate and control chemical and/or physical reactions under specified conditions. The device is equipped with the necessary structural, mechanical, and control components known in the art. The reactor unit may comprise one or more than one reactor vessels. Hence, the reactor unit may also be referred to as a reactor assembly. The reactor unit may be configured for batch or continuous processing.

As mentioned hereinbefore, HCN may be formed as a by-product in the second reaction.

Hence, the system may further comprise a scrubbing device 202 arranged in fluid communication with the reactor unit 201; the scrubbing device 202 being configured to conduct a third reaction of NaOH or KOH with HCN to form the first precursor, and wherein the scrubbing device 202 is further configured to feed the first precursor into the reactor unit 201.

### EXAMPLES

### Example 1: Synthesis of Prussian white compound and recycling of HCN

### Cycle 1

A first aqueous solution comprising 202.66 g of a first precursor being virgin NaCN (aq) was prepared and arranged in a reactor. The volume of the first aqueous solution was 720 ml, and the pH was about 12. A total amount of about 191.66 g of FeSO₄·7H₂O (s) was added to the first aqueous solution over a period of one (1) hour (also referred to as addition period). The NaCN was reacted with the (now dissolved) FeSO₄ (aq) to form a second aqueous solution comprising (dissolved) Na₄Fe(CN)₆ (aq). The first aqueous solution was agitated using an over-head stirrer throughout the addition period and a subsequent 10-minute-long aging period. The temperature of the first aqueous solution before the addition of FeSO₄·7H₂O was 20 °C and the resulting second aqueous solution had an increased temperature.

After the aging period, the second aqueous solution was filtered to produce a filtrate substantially free from solids, i.e., by-products, such as iron hydroxides. The filtrate was arranged in a reactor. An acid decomposition reaction of the Na₄Fe(CN)₆ present in the filtrate was instigated by heating the filtrate to a temperature of about 85 °C and introducing sulfuric acid to reach a pH of about 2.9 to form a slurry. The slurry was maintained at the temperature and the pH for about six (6) hours. The slurry was agitated and a flow of N₂ gas was used as carrier agent for the HCN and was directed through the headspace in the reactor in order to minimize oxidation of the formed Prussian white compounds. After the six (6) hours of reaction, a solid-liquid separation (filtering step) was carried out on the slurry to obtain a filter cake. the filter cake was washed with deionized water and subsequently dried, thereby obtaining Prussian white compounds in the form of particles.

During the above-mentioned acid decomposition reaction HCN was formed as a by-product. The HCN in gas phase was transported to a scrubber system where it was contacted with an aqueous solution comprising NaOH. This led to the formation of a scrubber solution comprising NaCN (l) (also referred to as recycled NaCN).

### Cycle 2-5

*Cycle 2* was carried out in a similar manner to *Cycle 1.* In *Cycle 2,* virgin NaCN was introduced into the scrubber solution obtained from *Cycle 1* to reach a target concentration of (dissolved) NaCN of about 341.27 g/L. The remaining steps of *Cycle 1* were repeated to obtain a new set of Prussian white particles and scrubber solution comprising recycled NaCN (l).

*Cycle 3* was conducted in a similar fashion to *Cycle 2* with the main difference being using the scrubber solution from *Cycle 2* instead of *Cycle 1. Cycle 4* and *5* were conducted following the same pattern.

The amounts of reactants used in each of the cycles as well as the amount of Prussian white produced are presented in table 1.

**Table 1: Summary of amount of virgin reactants used, recycled NaCN used, and Prussian white obtained.**

| Cycle # | FeSO₄·7H₂O [g] | Virgin NaCN [g] | Recycled NaCN [g] | Obtained Prussian white [g] |
|---|---|---|---|---|
| 1 | 191.6 | 202.66 | N/A | 106.3 |
| 2 | 191.6 | 160.3 | 42.0 | 73.1 |
| 3 | 191.6 | 161.6 | 41.0 | 85.0 |
| 4 | 191.6 | 187.37 | 15.5 | 102.0 |
| 5 | 191.6 | 122.35 | 79.6 | 102.1 |

### Example 2: Synthesis and characterization of Prussian white compound

A first aqueous solution comprising NaCN and NaOH was prepared and arranged in a reactor. The volume of the first aqueous solution was 1.05 L, and the pH was above 12. In the first aqueous solution, the concentration of (dissolved) NaCN was 45.8 g/L and (dissolved) NaOH was 36.0 g/L. A total amount of about 77 g of FeSO₄*7H₂O (s) was added to the first aqueous solution over a period of one (1) hour (also referred to as addition period). The NaCN was reacted with the (now dissolved) FeSOH to form a second aqueous solution comprising (dissolved) Na₄Fe(CN)₆. The first aqueous solution was agitated using a magnetic stirrer throughout the addition period. The temperature of the first aqueous solution before the addition of FeSO₄·7H₂O was 20 °C and the resulting second aqueous solution had an increased temperature.

After the addition period, the second aqueous solution was filtered to produce a filtrate substantially free from solids, i.e., by-products, such as iron hydroxides. The filtrate was arranged in a reactor. An acid decomposition reaction of the Na₄Fe(CN)₆ present in the filtrate was instigated by heating the filtrate to a temperature of about 85 °C and introducing sulfuric acid to reach a pH of about 2.9 to form a slurry. The slurry was maintained at the temperature for about 12 hours. The slurry was agitated and a flow of N₂ gas was used through the head space in the reactor in order to minimize oxidation of the formed Prussian white compounds. After the 12 hours of reaction, a solid-liquid separation (filtering step) was carried out on the filtrate to obtain a filter cake. the filter cake was washed with deionized water and subsequently dried, thereby obtaining Prussian white compounds in the form of particles.

### X-ray diffraction

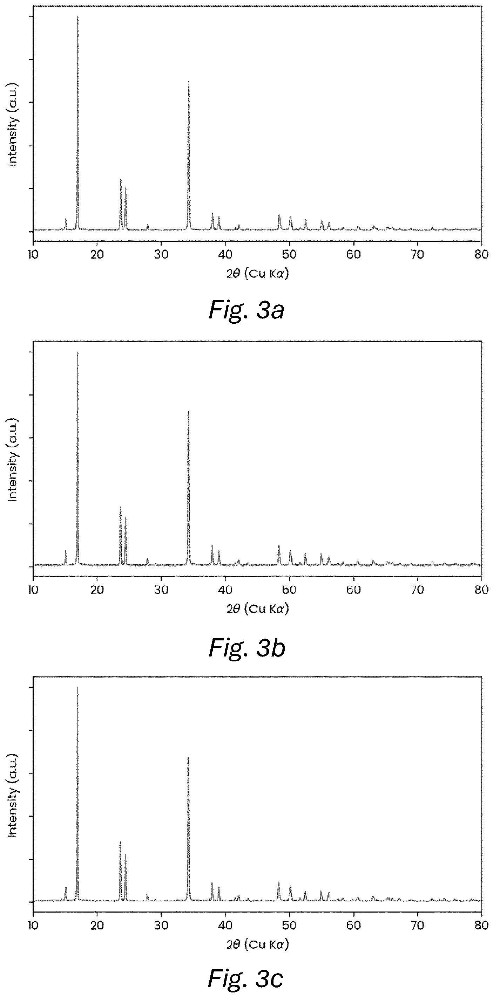

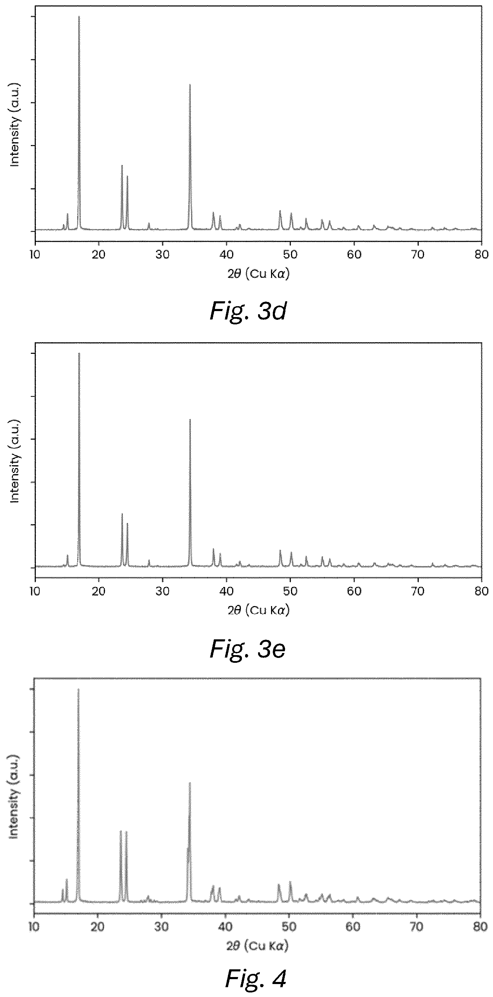

XRD and Rietveld refinement was conducted to determine the crystal structure of the Prussian white particles obtained from each of the cycles 1-5 of Example 1 and the Prussian white particles of Example 2. The XRD was conducted using a Bruker D8 Advance diffractometer equipped with a Cu Kα (λ1 = 1.540596 Å, λ2 = 1.544390 Å) source and a LYNXEYE XE-T detector over the range of 10-120 (2Θ) with a scanning step of 0.021°. The resulting X-ray diffractograms of the Prussian white particles from Cycles 1-5 are shown in Figure 3a-d, respectively, and the Prussian white particles of Example 2 are shown in Figure 4.

The Prussian white particles of Cycle 1-5 and Example 2 were concluded to be crystalline. The Prussian white particle of Cycle 1-5 had a hydrated rhombohedral crystal structure with an R3̅ space group symmetry. The Prussian white particles had a combination of hydrated rhombohedral crystal structure with an R3̅ space group symmetry and hydrated monoclinic phase with a P2₁/n space group symmetry. It is understood that as a plurality of particles are measured at the same time. It is contemplated that some particles may consist of the hydrated rhombohedral crystal, some of the hydrated monoclinic phase, and some a combination thereof. Such Prussian white particles have been found to be a promising cathode active material due to a high sodium content and low Fe(CN)₆ vacancy content. The high sodium content allows for producing battery cells having a high specific capacity (milliampere hours/gram). The rhombohedral crystal structure and the particular monoclinic structure identified through XRD indicate a high sodium content.

### Particle Size Analysis

Particle size distribution (PSD), Dv50 (volumetric particle size distribution), of the Prussian white particles from Cycle 1-5 was measured using a PSA 1090 LID (Anton Paar). The results of the Particle Analysis are presented in table 2.

**Table 2: Summary of the volumetric particle size distribution of the Prussian white particles obtained in Cycles 1-5.**

| **Cycle #** | **Dᵥ50 [µm]** |
|---|---|
| 1 | 13.2 |
| 2 | 16.9 |
| 3 | 14.2 |
| 4 | 10.6 |
| 5 | 11.2 |

Clearly, in view of Example 1 and 2, the method of the present disclosure advantageously allows for an environmentally friendly and cost-effective way of manufacturing Prussian white particles. The Prussian white particles obtained in each of Examples 1 and 2 have a high sodium content, making them particularly suitable for use as cathode active material in battery cells. The examples also demonstrate the successful recycling of the by-product HCN to form a precursor which can be used in a subsequent synthesis cycle.

Terms, definitions and embodiments of all aspects of the present disclosure apply mutatis mutandis to the other aspects of the present disclosure.

Even though the present disclosure has been described with reference to specific exemplifying embodiments thereof, many different alterations, modifications and the like will become apparent for those skilled in the art.

Variations to the disclosed embodiments can be understood and effected by the skilled addressee in practicing the present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method for manufacturing a Prussian White compound comprising:
a) reacting a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
b) reacting said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed, wherein said Prussian White compound is defined by the formula AₐX¹[X²(CN)₆]_{1-y}, wherein 1.8 < a ≤ 2, and 0 ≤ y ≤ 0.2, wherein said step a) is performed at a pH of from 9 to 14, preferably from 10 to 13.

2. The method according to claim 1, wherein said step a) is performed in a first reactor vessel, and wherein said step b) is performed in a second reactor vessel arranged downstream of and in fluid communication with said first reactor vessel.

3. The method according to claim 1 or claim 2, wherein said step b) is performed at a pH of from 1.8 to 4.5, preferably from 2 to 3.5.

4. The method according to any one of the preceding claims, wherein said step b) is performed at a temperature of from 65 to 95°C, preferably from 75 to 95°C.

5. The method according to according to any one of the preceding claims, wherein said salt in said step a) is defined by a first cation and a first anion; said acid in said step b) being defined by a second cation and a second anion, wherein said second anion of said acid corresponds to said first anion of said salt.

6. The method according to any one of the preceding claims, wherein said first precursor is reacted with the salt in said step a) in the presence of an alkaline additive, preferably wherein said alkaline additive is NH₄OH, NaOH, Na₃PO₄, Na₂CO₃, KOH, or K₂CO₃.

7. The method according to any one of the preceding claims, wherein said steps a) and b) are performed in an atmosphere comprising argon or nitrogen.

8. The method according to any one of the preceding claims, wherein said steps a) and b) are conducted in the presence of water, preferably in an aqueous solution.

9. The method according to any one of the preceding claims, wherein in said step b), HCN is formed as a by-product, and wherein said method further comprises:
c) recycling said HCN by reacting NaOH or KOH with said HCN to form said first precursor, and
d) introducing said first precursor into said step a).

10. The method according to claim 9, wherein said step c) is performed in a scrubbing device arranged in fluid communication with said first and/or said second reactor vessel.

11. The method according to claim 9 or claim 10, wherein said step d) of introducing said first precursor into said step a) comprises:
i) collecting said first precursor in an aqueous solution in said scrubbing device; and
ii) introducing said aqueous solution comprising said first precursor into said first reaction vessel.

12. The method according to any one of the preceding claims, wherein said salt in said step a) is FeSO₄, and wherein said step a) comprises the reaction:
6 NaCN + FeSO₄ → Na₄Fe(CN)₆ + Na₂SO₄,
or
6 KCN + FeSO₄ → K₄Fe(CN)₆ + K₂SO₄.

13. A system (200) for manufacturing a Prussian White compound comprising a reactor unit (201) configured to:
- conduct a first reaction of a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn; and
- conduct a second reaction of said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed, wherein said Prussian White compound is defined by the formula AₐX¹[X²(CN)₆]_{1-y}, wherein 1.8 < a ≤ 2, and 0 ≤ y ≤ 0.2, wherein said first reaction is performed at a pH of from 9 to 14, preferably from 10 to 13.

14. The system (200) according to claim 13, wherein said step a) is performed in a first reactor vessel of said reactor unit (201), and wherein said step b) is performed in a second reactor vessel of said reactor unit (201) arranged downstream of and in fluid communication with said first reactor vessel.

15. The system (200) according to claim 13 or claim 14, wherein HCN is formed as a by-product in said second reaction, and wherein said system (200) further comprises a scrubbing device (202) arranged in fluid communication with said reactor unit (201); said scrubbing device (202) being configured to conduct a third reaction of NaOH or KOH with said HCN to form said first precursor, and wherein said scrubbing device (202) is further configured to feed said first precursor into said reactor unit (201).
